# EUROPEAN PATENT APPLICATION

(11) **EP 1 852 661 A2**
(43) Date of publication of application: **07.11.2007**
(21) Application number: 07104771.6
(22) Date of filing: 23.03.2007
(51) Int. Cl.: F24F 13/14

(54) **Shutter movement device particularly for climate control apparatuses**

(30) Priority: 05.05.2006 IT PD20060177
(71) Applicant: Emerson Network Power S.R.L., 35028 Piove di Sacco (PD) (IT)
(72) Inventor: Grigoletto, Giuliano, 35020 Brugine PD (IT); Michieli, Stefano, 35020 Sant'Angelo di Piove PD (IT)
(74) Representative: Modiano, Micaela Nadia

(57) **Abstract**

A device for moving a shutter for blocking and diverting an air stream, particularly for climate control apparatuses, comprising a rotating element (11), which is actuated by an electric motor and is pivoted to a containment frame (12) for at least part of the machine body of a climate control apparatus (13), a first end (14) of a traction and pusher cable (15) being rigidly coupled to the rotating element (11), its opposite end (16) being rigidly coupled to the louver (17) of a shutter (26) of the louver type to be moved; the cable (15) is arranged so as to slide within a sheath (18) which is fixed to the frame (12) by means of two brackets (19, 20), a first one (19) proximate to the rotating element (11) and a second one (20) at the opening (21) which can be closed by the louver (17).

## Description

The present invention relates to a device for moving a shutter for blocking and diverting an air stream, particularly for climate control apparatuses.

Air conditioning devices provided with the option known as "free cooling" are currently known in the field of the climate control of enclosed spaces, such as industrial systems, telephone exchanges, offices, private dwellings and the like.

The free cooling option is based on the ability of the climate control apparatus to use, for conditioning an enclosed space, air which arrives from outside when said air has a higher enthalpy value than the air of the internal space.

Free cooling allows considerable energy saving on the part of the user as well as healthier management of the air of the internal space, which is appropriately changed when free cooling is activated.

A climate control apparatus of the free cooling type is the subject of EPA-07100880.9 of January 22, 2007 in the name of this same Applicant and comprises, within a box-like containment body:
- a first main fan for aspirating air from the enclosed space or from outside,
- a first shutter of the cylindrical type, arranged upstream of the first fan, for selecting the air stream aspirated by the first fan, either ambient air for a first direct cooling conditioning mode or external air for a second free cooling conditioning mode,
- an evaporator, to which the first fan sends the aspirated air to introduce into the room to be climate-controlled,
- a condenser, which is associated with the evaporator,
- a second fan for the passage of air over said condenser,
- a second shutter, which is adapted to divert the air stream that exits from the enclosed space either toward the second fan, when the climate control apparatus is operating in the second free cooling mode, or toward the first shutter, which is at least partially open toward the first fan, for aspiration by said first fan at least partly of ambient air, in the first cooling mode with ambient air recirculation,
- a compressor which is associated with the condenser and the evaporator so as to form a refrigeration circuit for cooling the aspirated air.

This climate control apparatus can operate according to three modes: a first direct cooling conditioning mode, i.e., in which the refrigeration circuit is active; a second free cooling conditioning mode, i.e., with the refrigeration circuit off, and a third forced free cooling conditioning mode, in which the refrigeration circuit is off but the second fan for the passage of air over the condenser is active and draws air from the internal environment.

By way of the second shutter which connects the internal environment to the second fan, this third mode allows to increase the efficiency and effectiveness of the free cooling operating mode simply by activating the second fan while the refrigeration circuit is off.

In this third mode, the second fan is adapted to draw air from the internal environment, increasing its replacement rate.

Correct, precise and timely movement of the second shutter is particularly important; said second shutter is of the louver type and is designed to divert the air stream which flows from the internal environment toward the outside or toward the first fan in case of recirculation or toward the second fan in case of free cooling or forced free cooling conditioning.

Generally, the shutters of climate control apparatuses with free cooling option are of the tilting type and are moved by means of an electric motor drive which turns them, by means of a shaft associated therewith, with respect to one of their axes.

The provision of such an electric motor drive entails costs in terms of components (electric motor and control electronics), associated consumptions and bulk within the box-like containment body.

Further, said known type of movement device, by having an electric motor drive, must be supplied with power by means of appropriate wiring, which like the electric motor drive can fail.

The aim of the present invention is to provide a movement device for a louver for blocking and diverting an air stream, particularly for climate control apparatuses, which is cheaper and more reliable than known types of movement device.

Within this aim, an object of the present invention is to provide a movement device which is simple to install.

Another object of the present invention is to provide a movement device which can be easily synchronized mechanically with the actuation of a shutter of the cylindrical type which might be part of the climate control apparatus.

Another object of the present invention is to provide a movement device for a louver for blocking and diverting an air stream, particularly for climate control apparatuses, which can be manufactured with known systems and technologies.

This aim and these and other objects, which will become better apparent hereinafter, are achieved by a device for moving a shutter for blocking and diverting an air stream, particularly for climate control apparatuses, characterized in that it comprises a rotating element, which is actuated by an electric motor and is pivoted to a containment frame for at least part of the machine body of a climate control apparatus, a first end of a traction and pusher cable being rigidly coupled to said rotating element, its opposite end being rigidly coupled to the louver of a shutter of the louver type to be moved, said cable being arranged so as to slide within a sheath which is fixed to the frame by means of two brackets, a first one proximate to the rotating element and a second one at the opening which can be closed by said louver.

Further characteristics and advantages of the invention will become better apparent from the following detailed description of a preferred but not exclusive embodiment thereof, illustrated by way of non-limiting example in the accompanying drawings, wherein:
Figure 1 is a sectional side view of a device according to the invention;

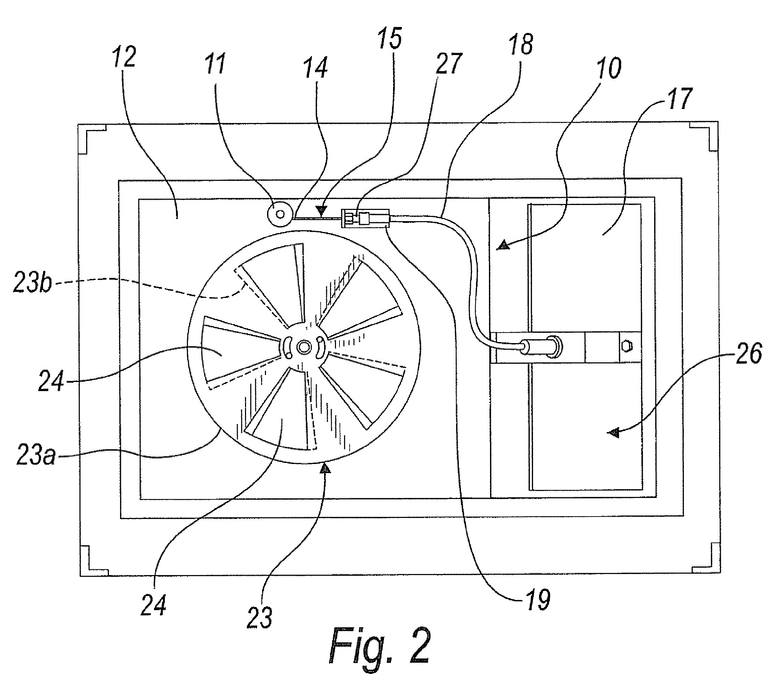

Figure 2 is a top view of the device according to the invention;
Figure 3 is a sectional side view of the device according to the invention in a first configuration thereof in which the louver is open;
Figure 4 is a sectional side view of the device according to the invention in a second configuration in which the louver is closed;

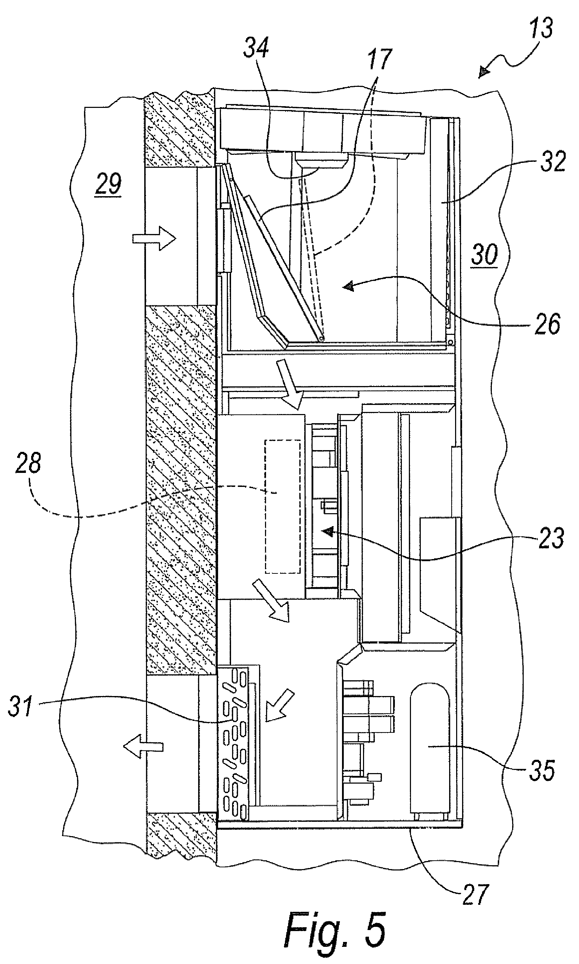

Figure 5 is a schematic sectional view of the device according to the invention inside a climate control apparatus.

With reference to the figures, a device for moving a shutter for blocking and diverting an air stream, particularly for climate control apparatuses according to the invention, is generally designated by the reference numeral 10.

The device 10 comprises a rotating element 11, which is actuated by an electric motor, not shown for the sake of simplicity, and is pivoted to a frame 12 for containing at least part of the machine body of a climate control apparatus 13.

A first end 14 of a traction and pusher cable 15 is rigidly coupled to the rotating element 11, and its opposite end 16 is rigidly coupled to a louver 17 to be moved of a shutter 26 of the louver type.

The cable 15 is arranged so as to slide within a sheath 18 which is fixed to the frame 12 by means of two brackets 19 and 20.

The first bracket 19 is arranged proximate to the rotating element 11 and the second bracket 20 is arranged at an opening 21 of the shutter which can be closed by the louver 17.

In this embodiment of the invention, which is a nonlimiting example, the rotating element 11 is a spool, which is arranged so as to turn about its own axis 11 a and is provided with a slot 22 through which the first end 14 of the cable 15, provided with an extraction-preventing ball, is inserted.

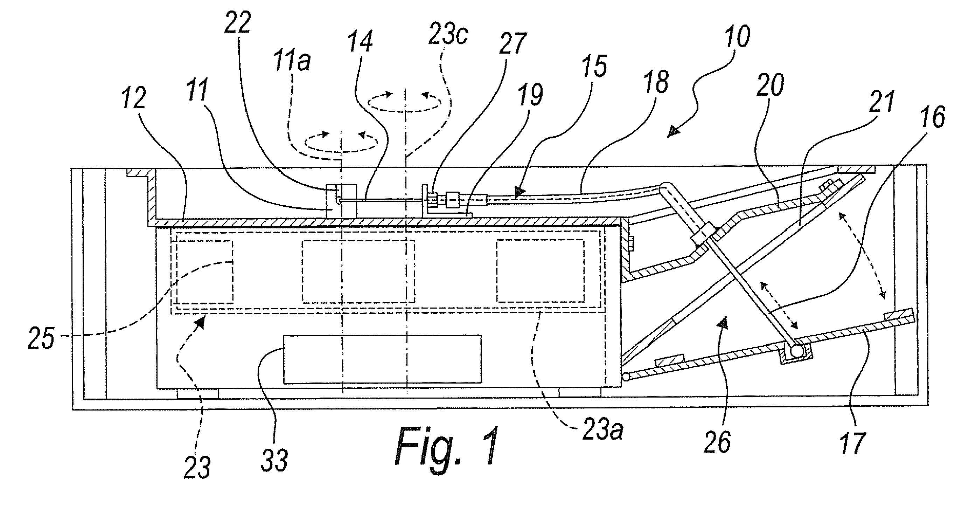

The spool can be actuated directly by means of an electric motor or, by interposing reduction gears shown schematically in Figure 1 and designated therein by the reference numeral 33, by the same electric motor that actuates another shutter with which the climate control apparatus to which the device 10 belongs is optionally equipped.

The sheath 18 is of the type commonly used for bicycle brakes; its locking to the frame 12 by means of the brackets 19 and 20 allows to actuate the louver 17 with the cable 15 both by pulling and by pushing.

The sheath 18 is fixed to the first bracket 19 by means of a tension regulator 27 of the screw type, which by way of a spring keeps the cable 15 constantly tensioned, facilitating the instantaneous and simultaneous conversion of the rotary motion of the rotating element 11 into the movement of the louver 17.

In the embodiment described here, the climate control apparatus 13 has a first shutter 23 of the cylindrical type.

The cylindrical shutter 23 is composed for example of a first outer drum 23 a, which is rigidly coupled to the frame 12, and a second inner drum 23b, which is shaped so as to close, by turning about its own axis 23c, the front openings 24 or lateral openings 25 of the first outer drum 23a.

The rotation of the second drum 23a about its own axis 23c is transmitted to the rotating element 11 by means of the gears 33.

In this manner, the rotating element 11, and the louver 17 with it, are moved not by means of an appropriately provided electric motor drive, which is wired and managed by the electronic control unit of the climate control apparatus, but by means of the same motor drive that actuates the cylindrical shutter 23; the movements of the cylindrical shutter 23 and of the louver shutter 26 to which the louver 17 belongs are therefore synchronized by means of the gears 33.

Said gears are understood to be of a known type and can be provided by means of components whose type and number of reduction stages can vary according to requirements.

The invention also relates to a climate control apparatus 13 of the free cooling type provided with a device 10 as described above.

The climate control apparatus 13 comprises, within a box-like containment body 27:
- a first main fan 28, for drawing air from the enclosed space 29 or from the outside 30;
- a first shutter 23 of the cylindrical type, upstream of the first fan 28, for selecting the air stream aspirated by the first fan 28, either ambient air for a first direct cooling conditioning mode or external air for a second free cooling conditioning mode,
- an evaporator 31, to which the first fan 28 sends the aspirated air to introduce it in the internal space 29 to be climate controlled,
- a condenser 32 which is associated with the evaporator 31;
- a second fan 34 for providing a passage of air over the condenser 32,
- a second shutter 26 of the louver type, which is adapted to divert the air stream that exits from the enclosed space 29 either toward the second fan 34, when the climate control apparatus 13 is operating in the second free cooling mode, or toward the first shutter 23, which is at least partly open toward the first fan 28, to make said first fan aspirate at least partly ambient air, in the first cooling mode with ambient air recirculation;
- a compressor 35, which is associated with the condenser 32 and with the evaporator 31 so as to form a refrigeration circuit for cooling the aspirated air.

The climate control apparatus 13 is characterized in that the second shutter 26 is moved by the device 10 according to the invention, which accordingly is constituted by the rotating element 11, which is actuated by an electric motor and is pivoted to the compartment for containing the first cylindrical shutter 23; as described above, the first end 14 of the traction and pusher cable 15 is rigidly coupled to the rotating element 11, and its opposite end 16 is rigidly coupled to the louver 17 to be moved.

The cable 15 is arranged so as to slide within the sheath 18 which is fixed to the frame of the climate control apparatus 13 by way of two brackets: the first bracket 19, proximate to the rotating element 11, and the second bracket 20 at the opening 21 which can be closed by the louver 17.

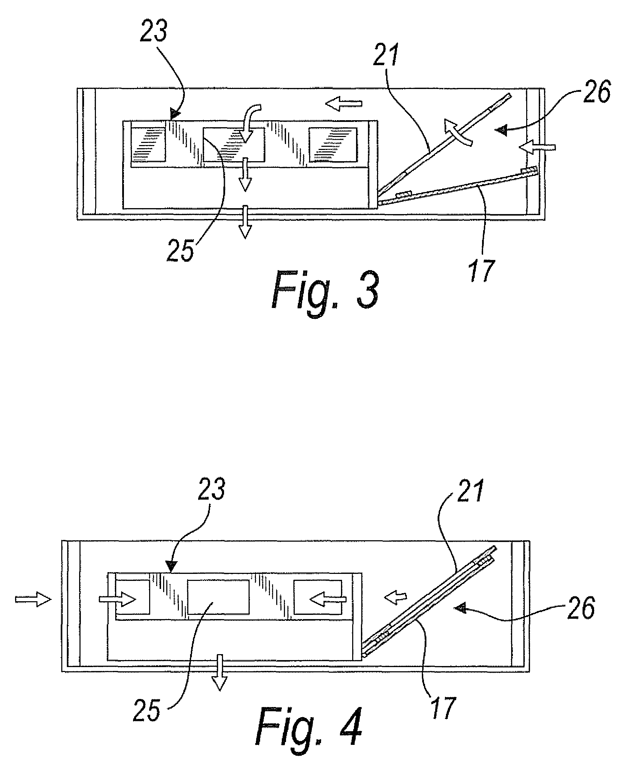

Figures 3 and 4 illustrate by way of example another similar use of the device according to the invention applied to a climate control apparatus provided with the cylindrical shutter 23 and the louver shutter 26.

Figure 3 illustrates schematically a first configuration of the device 10, with the first cylindrical shutter 23 with closed lateral openings 25 (and front openings 24 which are not shown and are open), while the second shutter 26 has the louver 17 open.

In this first configuration, the external air, whose behavior is represented by the arrows, passes through the opening 21 of the second shutter 26 and is introduced into the enclosed space through the front openings 24 of the first shutter 23, which are not shown in Figure 3 and are open.

Figure 4 illustrates schematically a second configuration of the device 10, with the first cylindrical shutter 23 with open lateral openings 25 (and front openings 24 which are not visible and are closed), while the second shutter 26 has the louver 17 closed.

In said second configuration, the external air cannot enter, since the second shutter 26 is closed, and the associated fan aspirates recirculated air from the internal enclosed space.

In practice it has been found that the invention thus described achieves the intended aim and objects.

In particular, the present invention provides a device for moving a louver for blocking and diverting an air stream, particularly for climate control apparatuses, which is cheaper and more reliable than known types of movement device.

The cable-operated movement of the louver shutter and the spool rotation synchronized mechanically directly with the movement of the cylindrical shutter in fact ensure a constant ratio in the reciprocating opening and closing movements of the two shutters without installing two electric motor drives, whose operation is coordinated by means of an electronic unit, to manage the actuation of the two shutters.

Moreover, the present invention provides a movement device which is very simple to install and requires quick and commonly known types of mechanical work.

Further, the present invention provides a climate control apparatus which is equipped with a device according to the same invention.

Moreover, the present invention provides a movement device for a louver for blocking and diverting an air stream, particularly for climate control apparatuses, and a climate control apparatus equipped with such a device, which can be manufactured with known systems and technologies.

In practice, the materials employed, so long as they are compatible with the specific use, as well as the dimensions, may be any according to requirements and to the state of the art.

The disclosures in Italian Patent Application No. PD2006A000177 from which this application claims priority are incorporated herein by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A device for moving a shutter for blocking and diverting an air stream, particularly for climate control apparatuses, **characterized in that** it comprises a rotating element (11), which is actuated by an electric motor and is pivoted to a containment frame (12) for at least part of the machine body of a climate control apparatus (13), a first end (14) of a traction and pusher cable (15) being rigidly coupled to said rotating element (11), its opposite end (16) being rigidly coupled to the louver (17) of a shutter (26) of the louver type to be moved, said cable (15) being arranged so as to slide within a sheath (18) which is fixed to the frame (12) by means of two brackets (19, 20), a first one (19) proximate to the rotating element (11) and a second one (20) at the opening (21) which can be closed by said louver (17).

2. The device according to claim 1, **characterized in that** said rotating element (11) is a spool, which is actuated directly by said electric motor or, by way of the interposition of reduction gears (33), by the electric motor which actuates a shutter (23) of the cylindrical type.

3. A climate control apparatus of the free cooling type, comprising, within a box-like containment body (27):
- a first main fan (28), for drawing air from the enclosed space (29) or from the outside (30);
- a first shutter (23) of the cylindrical type, upstream of the first fan (28), for selecting the air stream aspirated by the first fan (28), either ambient air for a first direct cooling conditioning mode or external air for a second free cooling conditioning mode;
- an evaporator (31), to which the first fan (28) sends the aspirated air to introduce it in the internal space (29) to be climate controlled;
- a condenser (32) which is associated with said evaporator (31);
- a second fan (34) for the passage of air over said condenser (32);
- a second shutter (26) of the louver type, which is adapted to divert the air stream that exits from the enclosed space (29) either toward said second fan (28), when the climate control apparatus (13) is operating in the second free cooling mode, or toward said first shutter (23), which is at least partly open toward the first fan (28), to make said first fan aspirate at least partly ambient air, in the first cooling mode with ambient air recirculation;
- a compressor (35), which is associated with a condenser (32) and an evaporator (31) so as to form a refrigeration circuit for cooling the aspirated air;
said climate control apparatus being **characterized in that** said second shutter (26) is moved by a device constituted by a rotating element (11), which is actuated by an electric motor and is pivoted to a containment frame (12) for at least part of the machine body of the climate control apparatus (13), a first end (14) of a traction and pusher cable (15) being rigidly coupled to said rotating element (11), its opposite end (16) being rigidly coupled to the louver (17) to be moved, said cable (15) being arranged so as to slide within a sheath (18) which is fixed to the frame (12) by means of two brackets (19, 20), a first one (19) proximate to the rotating element (11) and a second one (20) at the opening (21) which can be closed by said louver (17).
